# NEUE EUROPÄISCHE PATENTSCHRIFT

(11) **EP 2 475 957 B2**
(45) Veröffentlichungstag und Bekanntmachung des Hinweises auf die Entscheidung über den Einspruch: **28.02.2018**
(45) Hinweis auf die Patenterteilung: 18.06.2014
(21) Anmeldenummer: 10741927.7
(22) Anmeldetag: 21.07.2010
(51) Int. Cl.: G01C 3/08, G01C 15/00, G01S 17/08, H01L 31/107, G01S 7/481, G01S 7/486

(54) **OPTISCHER ENTFERNUNGSMESSER**
OPTICAL DISTANCE MEASURING DEVICE
TÉLÉMÈTRE OPTIQUE

(30) Priorität: 11.09.2009 DE 102009029364
(43) Veröffentlichungstag der Anmeldung: 18.07.2012
(73) Patentinhaber: Robert Bosch GmbH, 70442 Stuttgart (DE)
(72) Erfinder: EISELE, Andreas, 70771 Leinfelden-Echterdingen (DE); WOLST, Oliver, 72622 Nuertingen (DE); SCHMIDTKE, Bernd, 71229 Leonberg (DE)
(86) Internationale Anmeldenummer: PCT/EP2010/060523
(87) Internationale Veröffentlichungsnummer: WO 2011/029651

(56) Entgegenhaltungen:
- DE-A1- 19 936 847
- DE-A1-102006 013 290
- DE-A1-102006 049 935
- DE-A1-102007 003 024
- US-A1- 2006 175 529
- US-A1- 2007 182 949
- US-B1- 7 301 608
- Dissertation von Cristiano Niclass, "Single-Photon Image Sensors in CMOS: Picosecond Resolution for Three-Dimensional Imaging", École Polytechnique Fédérale de Lausanne, Schweiz, vorgelegt am 29.07.2008
- STOPPA D. ET AL: 'A CMOS 3-D imager based on single photon avalanche diode' IEEE TRANSACTIONS ON CIRCUITS AND SYSTEMS-I:REGULAR PAPERS Bd. 54, Januar 2007, Seiten 4 - 12
- D. Stoppa et al., "A 64-Pixel 3D Imager Based on Single Photon Avalanche Diodes", Proceedings of the 31st European Solid-State Circuits Conference ESSCIRC 2005. 12-16.09.2005, S. 487-490
- Zitatnachweis zu D10
- BORGHETTI F. ET AL: 'A CMOS Single-photon avalanche diode sensor for fluorescence lifetime imaging' IEEE INTERNATIONAL IMAGE SENSORS WORKSHOP Juni 2007, Seiten 250 - 253
- Konferenzprogramm zu D11

## Beschreibung

### GEBIET DER ERFINDUNG

Die Erfindung betrifft eine Messvorrichtung zur Messung einer Entfernung zwischen der Messvorrichtung und einem Zielobjekt mit Hilfe von optischer Messstrahlung.

### HINTERGRUND DER ERFINDUNG

Es sind optische Entfernungsmessgeräte bekannt, die einen zeitlich modulierten Lichtstrahl in Richtung auf ein Zielobjekt hin, dessen Abstand zu dem Messgerät ermittelt werden soll, ausrichten. Das von dem angepeilten Zielobjekt reflektierte oder gestreute, rücklaufende Licht wird von dem Gerät zumindest teilweise detektiert und zur Ermittlung der zu messenden Entfernung verwendet. Ein typischer Messbereich liegt dabei in einem Bereich von Entfernungen von wenigen Zentimetern bis zu mehreren 100 Metern.

Um die Entfernung zu dem Zielobjekt mit einem Lichtstrahl messen zu können, wird der Lichtstrahl beispielsweise in seiner Intensität zeitlich moduliert. Es können beispielsweise Lichtpulse ausgesendet werden und eine Laufzeit eines Lichtpulses von der Aussendung bis zur Detektion gemessen werden und daraus die Entfernung zu dem Zielobjekt errechnet werden. Hierzu müssen jedoch sehr kurze Lichtpulse ausgesendet werden und eine sehr schnelle Detektionselektronik verwendet werden, um ausreichend genaue Messergebnisse erhalten zu können. Alternativ kann ein Lichtstrahl in seiner Intensität zeitlich periodisch moduliert werden und eine Phasenverschiebung zwischen dem ausgesendeten und dem detektierten Lichtsignal verwendet werden, um die Laufzeit und damit die Entfernung zum Zielobjekt zu bestimmen. Das Prinzip der Laserentfernungsmessung ist allgemein unter der Bezeichnung" Time of Flight Ranging" beispielsweise mit kontinuierlicher Modulation der Intensität des Laserstrahls bekannt.

Es sind ferner sogenannte dreidimensionale (3D) Kameras bekannt, bei denen zusätzlich zu einer optischen Abbildung eines aufzunehmenden Objektes auch der jeweilige Abstand eines Bereichs auf der Oberfläche des aufzunehmenden Objektes zu der Kamera detektiert werden soll. Die Kamera weist hierzu eine abbildende Optik auf, die ein Bild des Objektes scharf auf eine Oberfläche eines dahinter angeordneten Detektors projiziert. Der Detektor weist dabei eine Vielzahl Matrix-artig angeordneter Pixel auf. Jedes der Pixel kann dabei eine Bildinformation wie beispielsweise eine Farbe oder Lichtintensität des von einem Oberflächenbereich des Zielobjekts reflektierten Lichtes ermitteln. Zusätzlich kann eine Information über eine Entfernung zwischen der Kamera und dem entsprechenden Oberflächenbereich des Zielobjekts ermittelt werden. Hierzu kann das Zielobjekt mit zeitlich modulierter Laserstrahlung beleuchtet werden und die von dem Zielobjekt rückreflektierte und auf den Detektor mit Hilfe einer Abbildungsoptik abgebildete Strahlung durch Bestimmen der Flugzeit dazu verwendet werden, um eine ortsaufgelöste Information über Entfernungen zu den jeweiligen Oberfiächenbereichen des Zielobjektes zu ermitteln.

Allerdings benötigt eine solche dreidimensionale Kamera zusätzlich zu einem ortsauflösenden Detektor mit einer Vielzahl von Pixeln auch eine abbildende Optik, um jeden Oberflächenbereich des Zielobjektes genau auf ein Pixel abzubilden, wobei das von diesem Pixel ermittelte Detektionssignal dann zur Bestimmung der Entfernung zu dem jeweiligen Oberflächenbereich herangezogen werden kann. Dies erfordert eine verhältnismäßig komplizierte, fokussierende Optik sowie die Möglichkeit einer einzelnen Auswertung von Detektionssignalen jedes der Pixel.

Die US 2007/0182949 A1 offenbart ein Verfahren und eine Anordnung die Entfernung zu einem Objekt mittels eines 3-d Kamera zu bestimmen. Die Vorrichtung der US 2007/0182949 A1 weist eine Sendeeinrichtung und eine Empfangseinrichtung in Form eines Halbleiterbildsensors mit einer Detektionsfläche auf. Des Weiteren besitzt diese Vorrichtung eine Auswerteeinrichtung, die es ermöglicht, eine Demodulation des von einem Zielobjekt reflektierten Lichtes durch zuführen. Die Detektionsfläche des Sensors der US 2007/0182949 A1 weist eine Vielzahl von Pixeln auf, wobei jedes Pixel ein lichtempfindliches Element bildet.

Die US 7,301,608 B1 offenbart ein nicht abbildendes LADAR (Light Radar) System auf "Photon-Counting-Basis". Das System der US 7,301,608 B1 besitzt dazu einen optischen Transmitter, der einen Laserimpuls auf ein Target hin aussendet und ein Empfangssystem, welches das vom Target rücklaufende Messsignal mittels eines Arrays von Avalanche-Dioden, die im Geiger-Mode betrieben werden, detektiert. Das rücklaufende Lasersignal wird gleichmäßig über die Oberfläche des Detektionsarray verteilt, so dass das Array homogen ausgelleuchtet ist. Aus der Vielzahl der im Geiger-Mode detektierten Ereignisse wird über einen Prozessor die Entfernung der Vorrichtung zum Target bestimmt.

Im Gegensatz hierzu werden einfache Entfernungsmessgeräte lediglich dazu verwendet, eine Entfernung zwischen dem Messgerät und dem Zielobjekt bzw. einem mit einem Laserstrahl anvisierten Punkt auf dem Zielobjekt zu ermitteln. Die Entfernung braucht dabei nicht ortsaufgelöst bestimmt werden. Es genügt in der Regel, eine gemittelte Entfernung zu bestimmen. Solche Entfernungsmessgeräte werden häufig in Hand-gehaltenen Geräten eingesetzt, um beispielsweise innerhalb eines Raumes den Abstand eines bestimmten Ortes zu umgebenden Zielobjekten wie zum Beispiel Wänden oder Einrichtungsgegenständen zu bestimmen. Ein Hand-gehaltenes Entfernungsmessgerät sollte dabei vorzugsweise einen möglichst einfachen, robusten und kostengünstigen Aufbau aufweisen und eine einfache Bedienung ermöglichen.

Aus der DE 10 2006 013 290 A1 ist eine Vorrichtung zur optischen Distanzmessung bekannt, bei der ein Detektor einer Empfangseinheit eine Mehrzahl von voneinander getrennten lichtempfindlichen Flächen aufweist, die getrennt voneinander aktivierbar sind. Jede der lichtempfindlichen Flächen weist dabei eine Fotodiode, beispielsweise eine PIN-Diode oder eine APD (Avalanche Photo Diode), oder einen CCD-Chip als lichtempfindliches Element auf. Diese lichtempfindlichen Elemente ermitteln ein analoges Detektionssignal, das einer Intensität des empfangenen Lichtes entspricht. Die lichtempfindlichen Flächen können selektiv aktiviert werden und auf diese Weise zu einer Gesamtdetektionsfläche kombiniert werden, die einem von einer Lichtquelle beleuchteten Teilbereich der Detektorfläche möglichst gut angepasst sein kann, um auf diese Weise ein Signal-Rausch-Verhältnis zu verbessern.

### OFFENBARUNG UND MÖGLICHE AUSFÜHRUNGSFORMEN DER ERFINDUNG

Es kann ein Bedarf an einer Messvorrichtung zur optischen Entfernungsmessung bestehen, die, insbesondere im Vergleich zu den zuvor beschriebenen herkömmlichen Entfernungsmessgeräten, einen vereinfachten Aufbau von darin verwendeten Elektronikkomponenten, insbesondere von Auswertekomponenten zur Auswertung von Detektionssignalen, zulässt.

Ferner kann ein Bedarf an einer Entfernungsmessvorrichtung bestehen, die möglichst zumindest einen der nachfolgenden Vorteile aufweist:
- Aufweitung einer Justagetoleranz einer Empfangsoptik der Entfernungsmessvorrichtung bezogen auf einen Detektor;
- Reduzierung einer Komplexität und von Anforderungen an eine Empfangsoptik;
- Erhöhung eines Dynamikbereiches insbesondere bei der Messung kleiner Entfernungen;
- Optimierung eines Signal-Rausch-Verhältnisses insbesondere bei der Messung großer Entfernungen; und/oder
- Verringerung einer für die Auswertung benötigten Chipfläche einer integrierten Schaltung.

Die erfindungsgemäße Messvorrichtung zur optischen Entfernungsmessung ist in Anspruch 1 definiert.

Die Sendeeinrichtung kann eine Lichtquelle, beispielsweise in Form einer LED, eines Lasers oder einer Laserdiode sein, die Licht zeitlich moduliert hin zu dem Zielobjekt aussendet. Die zeitliche Modulation kann hierbei kontinuierlich und/oder periodisch, beispielsweise sinusartig, erfolgen. Es können auch Pulszüge, beispielsweise nichtperiodisch wie z.B. in Form von sogenannten Pseudo-Noise-Pulsabfolgen ausgesendet werden.

Jedes der Pixel kann direkt oder beispielsweise unter Zwischenschaltung eines Multiplexers, der dazu ausgelegt ist, Detektionssignale mehrerer Pixel selektiv weiterzuleiten, mit der Auswerteeinrichtung verbunden sein. Auf diese Weise kann zum Beispiel erreicht werden, dass Detektionssignale einzelner Pixel oder einer Gruppe von Pixeln unabhängig von Detektionssignalen anderer Pixel von der Auswerteeinrichtung ausgewertet werden können.

Die Sendeeinrichtung und die Empfangseinrichtung sind vorzugsweise derart ausgelegt und aufeinander abgestimmt, dass von dem Zielobjekt zurücklaufende optische Messstrahlung unter normalen Messbedingungen, das heißt beispielsweise bei Messabständen von wenigen Zentimetern bis zu einigen 100 Metern, eine Mehrzahl von Pixeln gleichzeitig beleuchtet werden. Die Tatsache, dass eine Mehrzahl von Pixeln gleichzeitig beleuchtet wird, soll hierbei jedoch nicht wie bei herkömmlichen 3D-Kameras dazu benutzt werden, ein Abbild des Zielobjektes bzw. eine räumliche Auflösung hinsichtlich der Entfernung zu einzelnen Teilbereichen auf einer Oberfläche des Zielobjektes zu detektieren, sondern soll, wie weiter unten noch detaillierter erläutert, unter anderem Vorteile hinsichtlich einer Detektionsempfindlichkeit und/oder einer Justagetoleranz ermöglichen. Die Entfernung zwischen der Messvorrichtung und dem Zielobjekt wird dabei basierend auf einer Auswertung von Detektionssignalen mehrerer Pixel, insbesondere mehrerer der gleichzeitig beleuchteten Pixel, ermittelt.

Die Sendeeinrichtung kann hierzu einen Messstrahl aussenden, dessen Querschnitt ausreichend groß ist, dass der von dem Zielobjekt zurücklaufende Anteil des Messstrahls stets eine Mehrzahl von Pixeln beleuchtet. Um die von dem Zielobjekt zurücklaufende Messstrahlung zu bündeln und auf die Detektionsfläche zu leiten, um auf diese Weise für ein ausreichend starkes Detektionssignal zu sorgen, kann innerhalb eines optischen Weges von der Sendeeinrichtung zu der Empfangseinrichtung eine einfache Optik, beispielsweise in Form einer oder mehrerer Linsen, vorgesehen sein. Diese einfache Optik kann kostensparend und aufwandsreduzierend als nicht-automatisch-fokussierende Optik ("Fix-Fokus") ausgestaltet sein. Da eine solche nicht-automatisch-fokussierende Optik mit fester Brennweite einen von dem Zielobjekt zurücklaufenden Messstrahl nur dann optimal, d.h. mit kleinstem Spot-Durchmesser, auf die Detektionsfläche der Empfangseinrichtung fokussieren kann, wenn sich das Zielobjekt in dem der Brennweite und Bildebene entsprechenden Objektabstand zu der Messvorrichtung befindet, kann die Anzahl von Pixeln, die durch von dem Zielobjekt zurücklaufende Messstrahlung gleichzeitig beleuchtet werden, in Abhängigkeit von einem Abstand zwischen dem Zielobjekt und dem Messobjekt variieren. Beispielsweise kann die Optimierung des optischen Empfangssystems für den Empfang von Messstrahlung von weit entfernten Zielobjekten mit großem Objektabstand bedeuten, dass Brennweite und Bildabstand so zu wählen sind, dass für den großen Objektabstand die geometrische Abbildungsbedingung erreichtwird. Somit kann bei großer Entfernung der kleinste Spot-Durchmesser in der Bildebene erreicht werden ("die Abbildung ist scharf"). Durch die Festlegung der Brennweite und Bildebene kann die Anzahl von Pixeln, die im Falle eines näher liegenden Zielobjektes beleuchtet werden, wesentlich größer sein als bei einem weit entfernten Zielobjekt. Bei einem näher liegenden Zielobjekt kann die zurücklaufende Messstrahlung nicht mehr scharf abgebildet werden, so dass der beleuchtete Bereich der Detektionsfläche entsprechend größer werden kann.

Da die Detektionssignale einzelner Pixel unabhängig voneinander ausgewertet können, können die Empfangseinrichtung und die Auswerteeinrichtung dazu ausgelegt werden, eine Entfernung zwischen der Messvorrichtung und dem Zielobjekt basierend auf einer Auswertung von Detektionssignalen ausschließlich von Pixeln, auf die Licht der von der Sendeeinrichtung beleuchteten Fläche des Zielobjektes rückgestrahlt wird, zu ermitteln. Mit anderen Worten kann die Auswerteeinrichtung beispielsweise zunächst in einer Vorabmessung ermitteln, welche der Pixel der Detektionsfläche tatsächlich Messstrahlung der Sendeeinrichtung empfangen und welche Pixel lediglich Hintergrundstrahlung detektieren, und kann anschließend für die tatsächliche Entfernungsbestimmung lediglich die Detektionssignale der von der Messstrahlung beleuchteten Pixel verwenden. Hierdurch kann ein Signal-Rausch-Verhältnis erheblich erhöht werden.

Um die Entfernung zwischen der Messvorrichtung und dem Zielobjekt ermitteln zu können, weist die Auswerteeinrichtung eine Mehrzahl an Entfernungsbestimmungseinrichtungen (teilweise auch als "Binning-Schema" bekannt) auf. Eine Entfernungsbestimmungseinrichtung ist dazu ausgelegt, Daten zu ermitteln, die mit der zu bestimmenden Entfernung zwischen der Messvorrichtung und dem Zielobjekt korrelieren und aus denen daher letztendlich die gewünschte Entfernung ermittelt wird. Eine Flugdauer von Messstrahlung zwischen einer Aussendung von der Sendeeinrichtung bis zu einer Detektion der von dem Zielobjekt zurücklaufenden Messstrahlung auf der Detektionsfläche wird ermittelt und daraus die gewünschte Entfernung bestimmt. Die Entfernungsbestimmungseinrichtung kann hierzu eine von der Sendeeinrichtung bereitgestellte Information über die zeitliche Modulation ausgesendeter Messstrahlung mit von der Empfangseinrichtung bereitgestellten Detektionssignalen vergleichen. Im Fall einer periodisch modulierten ausgesendeten Messstrahlung kann beispielsweise aus einem Phasenunterschied zwischen einem Aussendungssignal und einem Detektionssignal eine entsprechende Entfernung ermittelt werden.

Prinzipiell kann in einer nicht zum Umfang der Erfindung gehörenden Ausführungsform eine einzige Entfernungsbestimmungseinrichtung für die Ermittlung einer Entfernung zwischen der Messvorrichtung und dem Zielobjekt genügen. Um die Anzahl von Entfernungsbestimmungseinrichtungen gering zu halten, kann es vorteilhaft sein, die Detektionssignale einzelner Pixel oder einer Gruppe von Pixeln zum Beispiel mit Hilfe eines Multiplexers nacheinander an eine Entfernungsbestimmungseinrichtung zu leiten. Aufgrund einer derart sequentiellen Verarbeitung von Detektionssignalen kann es zu einer Verlängerung einer Gesamtmessdauer kommen. Alternativ kann jedem der Pixel eine eigene Entfernungsbestimmungseinrichtung zugeordnet sein. In diesem Fall kann aus jedem der Detektionssignale der Vielzahl von Pixeln jeweils eine Entfernung bestimmt werden, möglicherweise zeitlich parallel zueinander, und aus der Vielzahl von bestimmten Entfernungen kann schließlich beispielsweise durch Mittelung eine letztendlich zu bestimmende Entfernung zwischen der Vorrichtung und dem Zielobjekt ermittelt werden. Allerdings kann es hierzu notwendig sein, eine sehr große Anzahl von Entfernungsbestimmungseinrichtungen in der Messvorrichtung vorzusehen, was den Aufbau und die Fertigung der Messvorrichtung kompliziert gestalten kann.

Sozusagen als Mittelweg zwischen diesen beiden extremen Alternativen kann eine Mehrzahl von Pixeln mit einer Entfernungsbestimmungseinrichtung verbunden sein und die Entfernungsbestimmungseinrichtung ist dazu ausgelegt, die entfernungskorrelierten Daten basierend auf Detektionssignalen der Mehrzahl von Pixeln zu bestimmen. Die hier vorgeschlagene Auswerteeinrichtung weist daher eine Mehrzahl von Entfernungsbestimmungseinrichtungen auf und ist dazu ausgelegt, die Entfernung zwischen der Messvorrichtung und dem Zielobjekt basierend auf den von den Entfernungsbestimmungseinrichtungen bestimmten entfernungskorrelierten Daten zu bestimmen, beispielsweise durch Mittelwertbildung.

Durch Einsatz einer Mehrzahl an Entfernungsbestimmungseinrichtungen kann die Zeit, die für das Auffinden der Messstrahlung empfangenden Pixel benötigt wird, reduziert werden, da durch geschickt gewählte Auswahlalgorithmen variable Kombinationen von Pixeln parallel ausgewertet werden können.

Die Anzahl von lichtempfindlichen Elementen oder die Fläche der einzelnen lichtempflindlichen Elemente, die in einem Pixel enthalten sind, kann abhängig vom Ort des Pixels innerhalb der Detektionsfläche der Empfangseinrichtung variabel ausgewählt sein. Beispielsweise kann bekannt sein, dass die von dem Zielobjekt zurücklaufende Messstrahlung abhängig vom Abstand des Zielobjekts von der Messvorrichtung an einer anderen Position und/oder mit einer anderen Querschnittsfläche auf die Detektionsfläche der Empfangseinrichtung auftreffen kann. Die Anzahl bzw. die Fläche von lichtempfindlichen Elementen innerhalb eines Pixels kann demnach ortsabhängig an die zu erwartende auftreffende Lichtintensität angepasst werden. Durch Anpassung der Flächen und/oder Anzahl der lichtempfindlichen Elemente innerhalb eines Pixels kann ein Dynamikbereich der Messvorrichtung optimiert werden. Durch Anpassung der Pixel-Flächen an eine Laserfleckgröße kann ein Signal-Rausch-Verhältnis optimiert werden.

Wenn beispielsweise im Lichtweg zwischen der Sendeeinrichtung und der Empfangseinrichtung eine nicht-automatisch-fokussierende Optik, die für weitentfernte Zielobjekte abbildend bzw. optimal fokussierend ausgelegt ist, angeordnet ist, kann für weit entfernte Zielobjekte die zurücklaufende Messstrahlung mit einem kleinen Fleck- bzw. Spot-Durchmesser fokussiert werden. Innerhalb eines solchen Bereiches der Detektionsfläche kann es vorteilhaft sein, dass jedes der Pixel lediglich eine einziges lichtempfindliches Element oder nur wenige lichtempfindliche Elemente enthält. Wenn mit einer solchen Fix-Fokus-Messvorrichtung näher liegende Zielobjekte anvisiert werden, kann die zurücklaufende Messstrahlung auf der Detektionsfläche nicht als kleiner Fleck fokussiert werden, sondern trifft eventuell defokussiert auf eine größere Teilfläche der Detektionsfläche. Insgesamt werden in diesem Fall dann mehr Pixel beleuchtet als im Fall eines weit entfernt liegende Zielobjektes. Daher kann es vorteilhaft sein, in Randbereichen des beleuchteten Teilbereiches der Detektionsfläche jeweils eine Mehrzahl von lichtempfindlichen Elementen zu einem einzelnen Pixel (oder "sub-array" oder "cluster") zusammenzufassen.

Beispielsweise kann die Sendeeinrichtung und die Empfangseinrichtung nebeneinander entlang einer Parallaxenachse angeordnet sein. Solche sogenannte biaxiale Messsysteme können den Vorteil haben, dass keine aufwändige Strahlungsteilung zur Selektion des rücklaufenden Messstrahls notwendig ist. Der von der Sendeeinrichtung ausgestrahlte und von dem Zielobjekt zurücklaufende Messstrahl kann in diesem Fall je nach Entfernung des Zielobjektes an einer anderen Stelle entlang der Parallaxenachse auf die Detektionsfläche treffen und unterschiedliche Querschnitte aufweisen. In diesem Fall kann es vorteilhaft sein, die Anzahl von lichtempfindlichen Elementen, die in einem Pixel enthalten sind, abhängig vom Ort des Pixels entlang der Parallaxenachse zu variieren. Insbesondere kann es vorteilhaft sein, die Anzahl von lichtempfindlichen Elementen, die in einem Pixel enthalten sind, in Pixeln nahe der Sendeeinrichtung kleiner zu wählen als in Pixeln entfernt von der Sendeeinrichtung.

Alternativ können die Sendeeinrichtung und die Empfangseinrichtung koaxial zueinander angeordnet sein. Bei einer solchen monoaxialen Messvorrichtung kann beispielsweise mit Hilfe semitransparenter Spiegel erreicht werden, dass das Zentrum des von der rücklaufenden Strahlung beleuchteten Bereichs der Detektionsfläche unabhängig von der Entfernung des Zielobjekts weitgehend orts-konstant bleibt. Allerdings kann der Querschnitt des beleuchteten Bereichs auf der Detektionsfläche weiterhin von der Entfernung des Zielobjektes abhängen. Bei weit entfernten Zielobjekten und einer Optik mit weiter Brennweite kann es zu einem kleinen beleuchteten Fleck kommen, bei näher liegenden Zielobjekten zu einem größeren beleuchteten Fleck. Es kann vorteilhaft sein, die Anzahl von lichtempfindlichen Elementen, die in einem Pixel enthalten sind, in Pixeln nahe dem Zentrum der Detektionsfläche kleiner zu wählen als in Pixeln entfernt von dem Zentrum der Detektionsfläche.

Mögliche Aspekte, Vorteile und Ausgestaltungen der Erfindung wurden vorangehend mit Bezug auf einzelne Ausführungsformen der Erfindung beschrieben. Die Beschreibung, die zugehörigen Figuren sowie die Ansprüche enthalten zahlreiche Merkmale in Kombination. Ein Fachmann wird diese Merkmale, insbesondere auch die Merkmale verschiedener Ausführungsbeispiele, auch einzeln betrachten und zu sinnvollen weiteren Kombinationen zusammenfassen.

### KURZE BESCHREIBUNG DER FIGUREN

Nachfolgend werden Ausführungsformen der Erfindung und darin enthaltene Teilaspekte mit Bezug auf die beigefügten Figuren beschrieben. Die Figuren sind lediglich schematisch und nicht maßstabsgetreu. Gleiche oder ähnliche Bezugszeichen in den Figuren bezeichnen gleiche oder ähnliche Elemente.
Fig. 1 zeigt eine Messvorrichtung zur optischen Entfernungsmessung gemäß einer Ausführungsform der vorliegenden Erfindung.
Fig. 2 zeigt eine schematisierte Schaltung von zwei lichtempfindlichen Elementen, die mit einem Kombinierer verbunden sind, für eine Messvorrichtung gemäß einer Ausführungsform der vorliegenden Erfindung.
Fig. 3 zeigt eine Draufsicht auf eine Detektionsfläche einer Empfangseinrichtung für eine Messvorrichtung gemäß einer Ausführungsform der vorliegenden Erfindung.
Fig. 4 zeigt eine Draufsicht auf eine alternative Detektionsfläche einer Empfangseinrichtung für eine Messvorrichtung gemäß einer Ausführungsform der vorliegenden Erfindung.
Fig. 5 zeigt eine einzelnes lichtempfindliches Element, das mit einer Entfernungsbestimmungseinrichtung verbunden ist.
Fig. 6 zeigt zwei lichtempfindliche Elemente, die über einen Multiplexer mit einer Entfernungsbestimmungseinrichtung verbunden sind.
Fig. 7 zeigt zwei Pixel mit jeweils 9 lichtempfindlichen Elementen, die über Kombinierer und Multiplexer mit einer Entfernungsbestimmungseinrichtung verbunden sind.
Fig. 8 zeigt eine Detektionsfläche einer Empfangseinrichtung mit Pixeln, bei denen die Anzahl von in den Pixeln enthaltenen lichtempfindlichen Elementen ortsabhängig variiert und welche über Kombinierer und Multiplexer mit mehreren Entfernungsbestimmungseinrichtungen verbunden sind.

### DETAILIERTE BESCHREIBUNG VON AUSFÜHRUNGSFORMEN

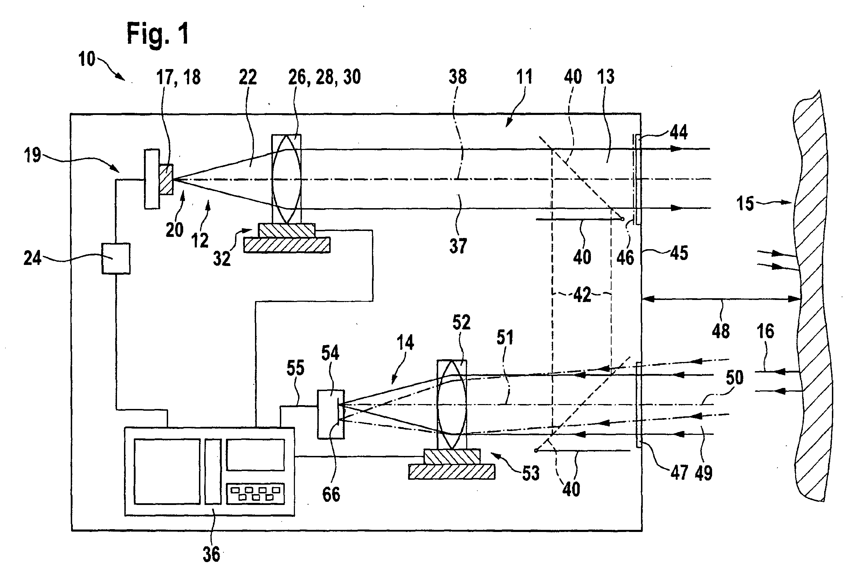

In Fig. 1 ist in schematischer Weise eine erfindungsgemäße Messvorrichtung 10 zur optischen Entfernungsmessung mit den wichtigsten Komponenten zur Beschreibung ihrer Funktion dargestellt.

Die Messvorrichtung 10 weist ein Gehäuse 11 auf, in dem eine Sendeeinrichtung 12 zur Aussendung optischer Messstrahlung 13 sowie eine Empfangseinrichtung 14 zur Detektion von von einem Zielobjekt 15 zurücklaufender Messstrahlung 16 angeordnet sind.

Die Sendeeinrichtung 12 beinhaltet eine Lichtquelle, die im dargestellten Ausführungsbeispiel durch eine Halbleiter-Laserdiode 18 realisiert ist. Die Laserdiode 18 sendet einen Laserstrahl 20 in Form eines für das menschliche Auge sichtbaren Lichtbündels 22 aus. Die Laserdiode 18 wird dazu über ein Steuergerät 24 betrieben, das durch eine entsprechende Elektronik eine zeitliche Modulation eines elektrischen Eingangssignals 19 der Laserdiode 18 erzeugt. Durch eine derartige Modulation des Diodenstromes lässt sich erreichen, dass die optische Messstrahlung 13, welche zur Entfernungsmessung genutzt wird, ebenfalls in gewünschter Weise zeitlich in ihrer Intensität moduliert wird.

Das Laserstrahlbündel 20 durchläuft anschließend eine Kollimationsoptik 26 in Form eines Objektivs 28, das in Fig. 1 in vereinfachter Weise in Form einer einzelnen Linse dargestellt ist. Das Objektiv 28 befindet sich in diesem Ausführungsbeispiel optional auf einer Verstellmimik 32, die prinzipiell eine Änderung der Position des Objektivs in allen drei Raumrichtungen, beispielsweise zu Justagezwecken, ermöglicht. Alternativ kann die Kollimationsoptik 26 jedoch auch bereits Bestandteil der Laserdiode 18 sein bzw. fest mit dieser verbunden sein.

Nach Durchlaufen des Objektivs 28 ergibt sich ein beispielsweise Amplitudenmoduliertes Signal der Messstrahlung 13 in Form eines nahezu parallelen Lichtbündels 37, das sich entlang einer optischen Achse 38 der Sendeeinheit 12 ausbreitet.

In der Sendeeinrichtung 12 kann sich zudem noch eine vorzugsweise schaltbare Strahlumlenkung 40 befinden, die es gestattet, die Messstrahlung 13 ganz oder teilweise unter Umgehung des Zielobjektes 15 direkt, das heißt geräteintern, auf die Empfangseinrichtung 14 umzulenken. Auf diese Weise kann eine geräteinterne Referenzstrecke 42 erzeugt werden, die eine Kalibrierung bzw. einen Abgleich der Messvorrichtung gestattet.

Wird mit der Messvorrichtung 10 eine Entfernungsmessung durchgeführt, verlässt die Messstrahlung 13 das Gehäuse 11 der Messvorrichtung durch ein optisches Fenster 44 in der Stirnwand 45 der Messvorrichtung 10. Die Öffnung des optischen Fensters 44 kann beispielsweise durch einen Shutter 46 gesichert sein. Zur eigentlichen Messung wird die Messvorrichtung 10 dann auf ein Zielobjekt 15 hin ausgerichtet, dessen Entfernung 48 zur Messvorrichtung 10 ermittelt werden soll. Das an dem gewünschten Zielobjekt 15 reflektierte oder gestreute Signal 16 bildet zurücklaufende optische Messstrahlung 16 in Form eines zurücklaufenden Strahlenbündels 49 bzw. 50, das zu einem gewissen Teil wieder in die Messvorrichtung 10 zurückgelangt.

Durch ein Eintrittsfenster 47 an der Stirnseite 45 der Messvorrichtung 10 wird die zurücklaufende Messstrahlung 16 in die Messvorrichtung 10 eingekoppelt und trifft dann, wie in Fig. 1 dargestellt, auf eine Empfangsoptik 52.

In Fig. 1 sind exemplarisch zur Verdeutlichung zwei zurücklaufende Messstrahlenbündel 49 bzw. 50 für zwei unterschiedliche Zielobjektentfernungen 48 eingezeichnet. Für große Objektentfernungen, wobei groß als groß gegenüber der Brennweite der Empfangsoptik 52 interpretiert werden kann, fällt die vom Zielobjekt 15 zurücklaufende optische Messstrahlung 16 annähernd parallel zur optischen Achse 51 der Empfangseinrichtung 14 ein. Dieser Fall ist im Ausführungsbeispiel der Fig. 1 durch das Messstrahlenbündel 49 repräsentiert. Mit kleiner werdender Objektentfernung wird die in die Messvorrichtung einfallende zurücklaufende Messstrahlung 16 aufgrund einer Parallaxe immer mehr gegenüber der optischen Achse 51 der Empfangseinrichtung 14 geneigt. Als Beispiel für ein solches rücklaufendes Messstrahlenbündel im Nahbereich der Messvorrichtung ist in Fig. 1 das Strahlenbündel 50 eingezeichnet.

Die Empfangsoptik 52, die in Fig. 1 ebenfalls nur schematisch durch eine einzelne Linse symbolisiert ist, fokussiert das Strahlenbündel der zurücklaufende Messstrahlung 16 auf die Detektionsfläche 66 eines in der Empfangseinrichtung 14 vorgesehenen Empfangsdetektors 54. Der Detektor 54 weist zur Detektion der optischen Messstrahlung eine Vielzahl von Pixeln auf. Jedes der Pixel weist mindestens eine lichtempfindliches Element auf. Durch die in der Detektionsfläche 66 vorgesehenen lichtempfindlichen Elemente, die einzeln oder in Gruppen zusammengefasst in Pixeln Matrix-artig angeordnet und mit einer Auswerteeinrichtung 36 verbunden sind, wird die einfallende zurücklaufende Messstrahlung 16 in ein elektrisches Signal 55 umgewandelt und der weiteren Auswertung in der Auswerteeinrichtung 36 zugeführt.

Die von einem einzelnen lichtempfindlichen Element oder einer Kombination von lichtempfindlichen Elementen generierten Detektionssignale können den in einer Auswerteeinrichtung 36 enthaltenen Entfernungsbestimmungseinrichtungen zugeführt werden. Eine Entfernungsbestimmungseinrichtung kann die Detektionssignale aufsummieren und daraus ein Signal erzeugen, das einer zeitabhängigen Intensität des auf die jeweiligen lichtempfindlichen Elemente auftreffenden Lichtsignals bzw. der Lichtintensität entspricht. Indem dieses Signal in Relation zu einem Anregungssignal gesetzt wird, das den zeitlichen Verlauf der von der Sendeeinrichtung emittierten Photonenrate angibt, kann auf eine Photonenflugzeit von der Sendeeinrichtung hin zu dem Zielobjekt und wieder zurück zu der Empfangseinrichtung geschlossen werden. Falls die Sendeeinrichtung das ausgesendete Licht beispielsweise sinusartig periodisch moduliert, kann eine Flugzeit aus einem Phasenunterschied zwischen der ausgesendeten und der detektierten Messstrahlung ermittelt werden.

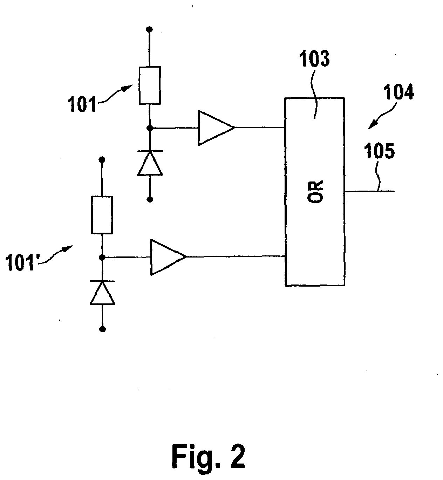

Fig. 2 zeigt zwei lichtempfindliche Elemente 101, 101', deren Detektionssignale jeweils an ein ODER-Gatter 103 weitergeleitet werden. Das ODER-Gatter 103 wirkt als Kombinierer 104, indem es sowohl Detektionssignale des ersten lichtempfindlichen Elements 101 als auch Detektionssignale des zweiten lichtempfindlichen Elements 101' aufnimmt und an einem Ausgang 105 ein kombiniertes Signal dieser Eingangssignale ausgibt.

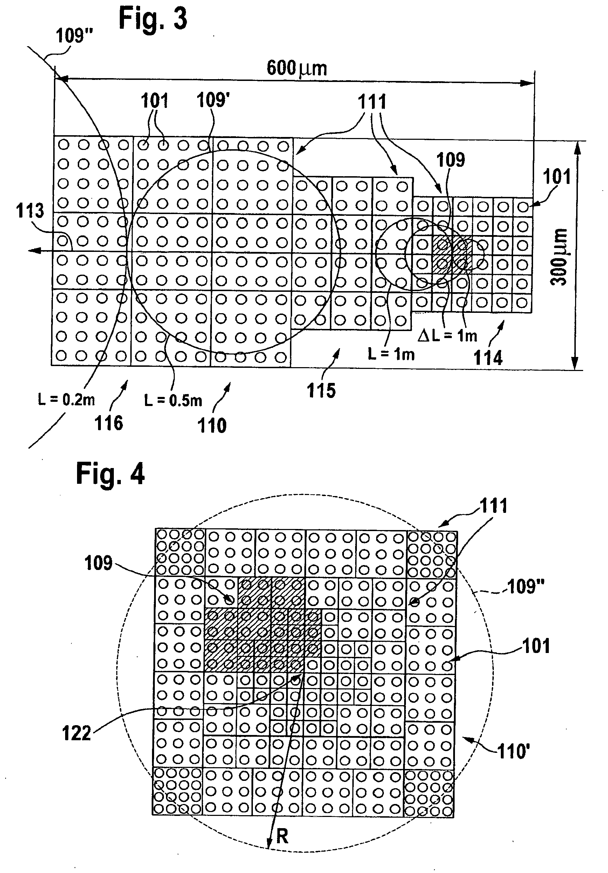

Fig. 3 zeigt schematisch eine Detektionsfläche 110 einer Detektionseinrichtung 54 für eine Laser-Entfernungsmessvorrichtung mit unkorrigierter Parallaxe. Hierbei sind kreisförmige Laserflecke 109 oder Laserspots, deren Durchmesser abhängig von einer Entfernung L zwischen der Messvorrichtung und dem Zielobjekt variiert, auf der Detektionsfläche 110 eingezeichnet. Es wurde hierbei eine ideale Linse mit einer Brennweite f = 30 mm, einem Durchmesser d = 4 mm und einer Parallaxe von 5 mm für den Fall optimaler Justage auf große Entfernungen angenommen. Die Laserstrahlung wurde dabei mit einer Divergenz von 1 mrad angenommen. Es ist bei dieser Ausgestaltung der Detektionsfläche 110 vorteilhaft, dass die Größe der Pixel 111 bzw. die Anzahl von lichempfindlichen Elementen 101 innerhalb jeweiliger Pixel 111 entlang der Parallaxenachse 113 zunimmt. Die Parallaxenachse wird hierbei als die Schnittgerade zwischen einer Detektionsflächenebene und einer Ebene, die von der optischen Achse der Empfangsoptik und der Laserstrahlachse der Entfernungsmessvorrichtung aufgespannt wird, angenommen. Es ist zu erkennen, dass in einem ersten Bereich 114, in dem der Laserfleck 109 auftrifft, wenn der Laserstrahl von einem weit entfernten Zielobjekt zurückgestrahlt wird, kleine Pixel vorgesehen sind, die jeweils nur ein einziges lichtempfindliches Element enthalten. In einem Bereich 115, in dem der Laserfleck 109' auftrifft, wenn das Zielobjekt etwa 0,5 bis 1 m entfernt ist, sind größere Pixel mit jeweils vier lichtempfindlichen Elementen vorgesehen. In einem weiteren Bereich 116, in dem der Laserfleck 109" für den Fall sehr naher Zielobjekte auftrifft, sind besonders große Pixel mit 8 bzw. 16 lichtempfindlichen Elementen vorgesehen. Die Empfangsoptik ist dabei so optimiert, dass die bestmögliche Abbildungsqualität, das heißt der kleinstmögliche Laserfleckdurchmesser auf der Detektionsfläche, bei der größten Entfernung des Zielobjekts erreicht wird.

Bei großen Entfernungen ist der Laserfleck 109 aufgrund der scharfen Abbildung verhältnismäßig klein. Gleichzeitig ist die aus zurücklaufender Mess- und Hintergrundstrahlung zusammengesetzte Intensität des auftreffenden Lichtes aufgrund des geringen Anteils der Messstrahlung von dem weit entfernten Zielobjekt verhältnismäßig gering. Bei näher positionierten Zielobjekten wird insgesamt mehr Messstrahlung vom Zielobjekt zurück zur Detektionsfläche 110 reflektiert bzw. gestreut. Gleichzeitig wird die Messstrahlung durch die Fix-Fokus-Empfangsoptik nicht mehr scharf auf die Detektionsfläche 110 abgebildet.

In Summe ergibt sich aus einer geometrischen Betrachtung für einen LaserEntfernungsmesser mit leicht divergentem Laser-Strahl und Fix-Fokus-Empfangsoptik für den Anteil der empfangenen Laserstrahlung bei großen Entfernungen eine quadratisch über der Entfernung abfallende und bei geringen Entfernungen eine über der Entfernung konstante Licht-Intensität in der Detektorebene. Der Intensitätsanteil der Hintergrundstrahlung ist hingegen in erster Näherung entfernungsunabhängig.

Mit einer wie in Fig. 3 dargestellten ortsabhängigen Ausgestaltung der Größe der in der Detektionsfläche 110 enthaltenen Pixel 101 kann zum einen erreicht werden, dass sowohl bei großen Entfernungen des Zielobjektes als auch bei kleinen Entfernungen des Zielobjektes ein Laserfleck 109 jeweils auf eine Mehrzahl von Pixeln 111 trifft und von diesen ausgewertet werden kann. Die Größe der aktiven Detektionsfläche kann dabei optimal an die Größe des Laserflecks angepasst und somit das Signal-Rausch-Verhältnis optimiert werden. Zum anderen kann mit einer solchen ortsabhängigen Ausgestaltung auch der Dynamik-Bereich der lichtempfindlichen Elemente optimal ausgenutzt werden, da die Lichtintensität des auftreffenden Lichtes (Laser- und Hintergrund-Anteil) bei großen Entfernungen geringer ist als bei kleinen Entfernungen. Bei den Detektorflächen, die nur bei geringen Entfernungen mit empfangener Messstrahlung beaufschlagt werden, kann daher die Fläche der einzelnen lichtempfindlichen Elemente reduziert werden. In den Detektorbereichen, in denen die Intensität der empfangenen Messstrahlung nahezu konstant bleibt, kann die Anzahl von in den einzelnen Pixeln 111 enthaltenen lichtempfindlichen Elementen 101 bei gleichbleibender Fläche der lichtempfindlichen Elemente vergrößert werden.

Fig. 4 zeigt eine Ausführungsform einer Detektionsfläche 110' für einen koaxialen Laserentfernungsmesser oder einen Laserentfernungsmesser mit korrigierter Parallaxe. Eine solche Korrektur kann mit Hilfe eines Nahbereichselementes oder alternativer, bekannter Methoden erreicht werden. In einem solchen Fall dominiert im Wesentlichen der Abbildungsfehler durch die endliche Schärfentiefe der Empfangsoptik, so dass eine konzentrische Anordnung der Pixel gleicher Größe vorteilhaft ist. Ein von einem weit entfernten Zielobjekt zurücklaufender Laserstrahl wird gut fokussiert und erzeugt einen relativ kleinen Laserfleck 109 in der Nähe des Zentrums 122 der Detektionsfläche 110', das heißt in der Nähe des Durchstoßpunktes der optischen Achse der Empfangsoptik durch die Detektionsflächenebene. Ein von einem näher liegenden Zielobjekt zurücklaufender Laserstrahl erzeugt einen Laserfleck 109" mit wesentlich größerem Durchmesser. Die Pixel 111 weisen in der Nähe des Zentrums 122 eine geringere Fläche und eine geringere Anzahl von darin enthaltenen lichtempfindlichen Elementen 101 auf als entfernt vom Zentrum 122 der Detektionsfläche 110', das heißt am Rand der Detektionsfläche.

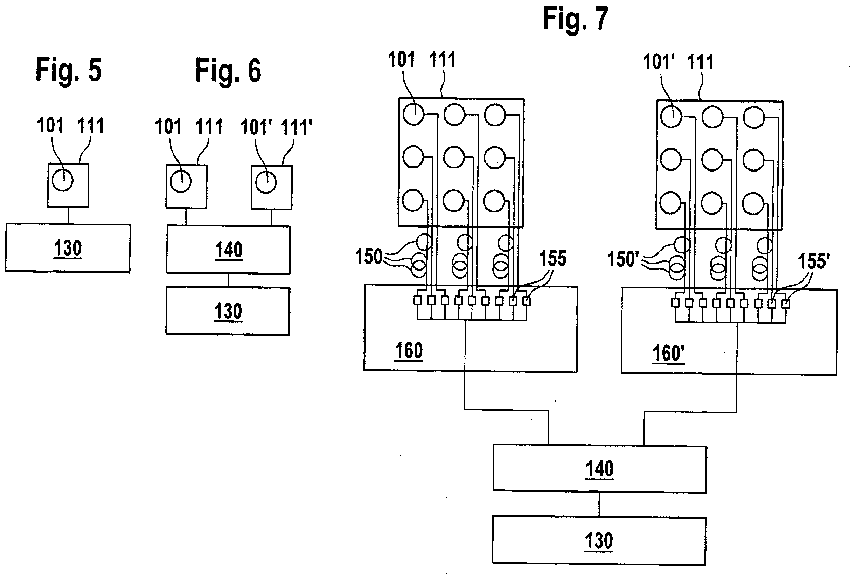

In den Fig. 5 bis 7 sind einzelne Elemente, wie sie zur Realisierung einer Empfangseinrichtung gemäß Ausführungsformen der vorliegenden Erfindung eingesetzt werden, als Blockschema dargestellt.

Fig. 5 zeigt ein Pixel 111 mit einem einzelnen lichtempfindlichen Element 101. Das Pixel ist mit einer Entfernungsbestimmungseinrichtung 130 verbunden.

Fig. 6 zeigt zwei Pixel 111, 111' mit jeweils einem lichtempfindlichen Element 101, 101'. Die Pixel 111, 111' sind mit einem Multiplexer 140 verbunden, der die von den Pixeln 111, 111' gelieferten Detektionssignale selektiv an eine Entfernungsbestimmungseinrichtung 130 weiterleitet.

In Fig. 7 ist eine Anordnung von zwei Pixeln 111, 111' mit jeweils neun lichtempfindlichen Elementen 101, 101' dargestellt. Die Detektionssignale von den einzelnen lichtempfindlichen Elementen 101, 101' werden, gegebenenfalls nach einer durch zusätzliche Verzögerungselemente 150, 150' bewirkten zeitlichen Verzögerung, jeweils an einen Kombinierer 160, 160' weitergeleitet. Die Verzögerung kann der Kompensation von Laufzeitunterschieden und damit der zeitlichen Synchronisation der lichtempfindlichen Elemente eines Pixels oder verschiedener Pixel dienen. In den Kombinierern 160, 160' werden die Detektionssignale miteinander kombiniert. Die kombinierten Detektionssignale werden von den Kombinierern 160, 160' an einen Multiplexer 140 und von dort aus weiter an eine Entfernungsbestimmungseinrichtung 130 geleitet.

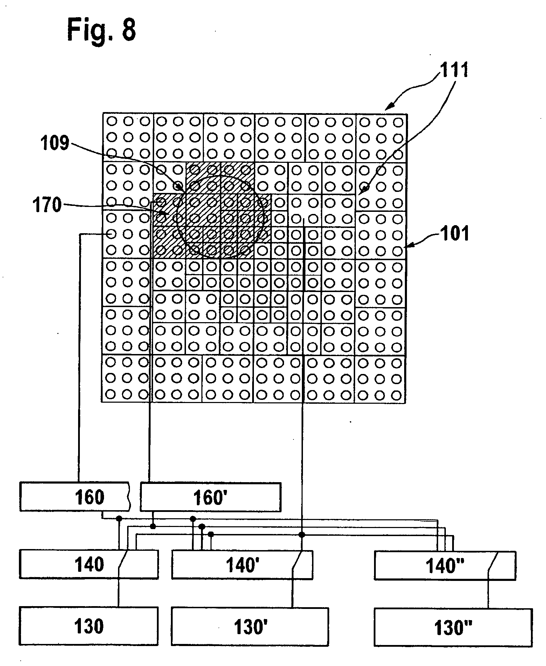

Fig. 8 zeigt eine spezielle Ausführungsform für eine Entfernungsmessvorrichtung mit korrigierter Parallaxe unter Verwendung solcher Elemente für N = 92 Pixel 111. Hierbei weisen 48 Pixel lediglich ein einzelnes lichtempfindliches Element auf, 24 Pixel weisen jeweils vier lichtempfindliche Elemente in einer 2x2-Anordnung auf und 20 Pixel weisen jeweils 9 lichtempfindliche Elemente in einer 3x3-Anordnung auf. Jedes Pixel 111 mit mehr als einem lichtempfindlichen Element 101 ist genau mit einem Kombinierer 160, 160' verbunden. Es gibt demnach 44 Kombinierer 160. Die Ausgänge der Pixel 111 mit nur einem lichtempfindlichen Element bzw. der Kombinierer 160 sind mit Eingängen von K Multiplexern 140 verbunden. Die Ausgänge der Multiplexer 140 sind wiederum mit M>=2 Entfernungsbestimmungseinrichtungen 130 verbunden. Es gilt dabei weder notwendigerweise M = K noch M = N. Exemplarisch sind die Verbindungen für drei Pixel 111 verschiedener Größe und Anzahl lichtempfindlicher Elemente dargestellt. Eine in Fig. 11 schraffiert dargestellte Fläche gibt eine effektive Detektorfläche 170 an, die diejenigen Pixel 111 umfasst, die tatsächlich vom Laserlicht des Laserflecks 109 beleuchtet werden und anhand derer eine Entfernungsmessung zu dem Zielobjekt durchgeführt werden kann.

Abschließend sollen Aspekte und Vorteile von Ausführungsformen der Erfindung noch einmal mit anderen Worten zusammengefasst werden:
Eine Ausführungsform der Erfindung beruht auf dem Kerngedanken, die Art der Anordnung einzelner lichtempfindlicher Elemente in Pixeln, deren Signale kombiniert werden, bevor sie einer zeitlichen Auswerteeinheit mit einer Mehrzahl an Entfernungsbestimmungseinrichtungen zur weiteren Auswertung zugeführt werden, in vorteilhafter Weise auszugestalten. Die Menge an lichtempfindlichen Elementen, deren Signale mittels eines Kombinierers zusammengefasst werden, bildet dabei ein Pixel.

Die einzelnen Pixel können unabhängig voneinander betrieben werden. Insbesondere kann eine Phasen-Auswertung einer kontinuierlichen Welle oder alternativ eine Flugzeitauswertung eines Pulses für jedes einzelne Pixel ausgeführt werden.

Eine Kombination mehrerer lichtempfindlicher Elemente zu Pixeln kann räumlich derart ausgestaltet werden, dass das Signal-Rausch-Verhältnis sowohl bei großen als auch bei kleinen Entfernungen insbesondere unter starker Hintergrundbeleuchtung mit wenigen Entfernungsbestimmungseinrichtungen optimiert werden kann. Erreicht werden kann dies über eine über die Detektionsfläche ortsabhängige Anpassung der Größe der Pixel bzw. der Anzahl von lichtempfindlichen Elementen, die zu einem Pixel kombiniert werden.

Die speziell auf Erhöhung des Signal-Rausch-Verhältnisses bei einem Laserentfernungsmesser hin optimierte Art der Anordnung von wahlweise Pixeln mit nur einem lichtempfindlichen Element oder Pixeln mit unterschiedlicher Größe und Anzahl von lichtempfindlichen Elementen stellt eines der Unterscheidungsmerkmale sowohl zu herkömmlichen Laserentfernungsmessern als auch zu 3D-Kameras dar. Diese Anordnung kann die Anforderungen an eine Justage einer Optik innerhalb der Messvorrichtung senken und kann gleichzeitig zu einem optimierten Signal-Rausch-Verhältnis bei- ' tragen, auch wenn die Empfangseinrichtung nicht in der Bildebene der Optik liegt, wie dies zum Beispiel bei Fix-Fokus-Systemen auftreten kann.

Eine Detektionsfläche kann so groß dimensioniert sein, dass die Anforderungen an die Justage der Empfangsoptik verringert werden können. Außerdem kann der Einfluss optischer Abbildungsfehler, insbesondere der Fehler durch Defokussierung aufgrund zu geringer Schärfentiefe, minimiert werden. Dadurch können die Anforderungen an die optische Qualität der Empfangsoptik verringert werden.

Ein weiterer Vorteil kann die Optimierung des Signal-Rausch-Verhältnisses insbesondere bei großen Messentfernungen unter hohem Hintergrundlicht-Anteil sein. Dies kann dadurch erreicht werden, dass die effektive Detektionsfläche bei allen Entfernungen optimal an die Größe des tatsächlich abgebildeten Lasermessflecks in der Detektionsebene angepasst, das heißt minimiert werden kann. Nach abgeschlossener Messung können gezielt die Signale von ausschließlich denjenigen einzelnen lichtempfindlichen Elementen bzw. Pixeln mit mehreren lichtempfindlichen Elementen ausgewertet werden, die tatsächlich Laserstrahlung empfangen. Dadurch kann die effektive Detektionsfläche reduziert und der Rauschbeitrag des Hintergrundlichtes minimiert werden, was gleichbedeutend mit einer Verbesserung des Signal-Rausch-Verhältnisses sein kann.

Ein weiterer Vorteil kann darin bestehen, dass aufgrund der Zusammenfassung mehrerer lichtempfindlicher Elemente innerhalb eines Pixels weniger Entfernungsbestimmungseinrichtungen als lichtempfindliche Elemente vorhanden sind benötigt werden. Dies kann eine benötigte Chipfläche einer integrierten Schaltung reduzieren. Insbesondere bei Laserentfernungsmessern, die in der Regel mit einer festen Brennweite arbeiten, kann dieser Vorteil eine wichtige Rolle spielen, da der Laserfleckdurchmesser dann in Abhängigkeit von der Entfernung des Zielobjekts variieren kann. Fig. 6 verdeutlicht dies für ein System, bei dem der Parallaxen-Fehler nicht korrigiert ist. Um das Signal-Rausch-Verhältnis wie zuvor beschrieben durch Minimierung der effektiven Detektionsfläche zu optimieren, kann bei größeren Laserfleck-Durchmessern, das heißt in der Regel bei geringeren Entfernungen des Zielobjektes, dementsprechend auch nur eine geringere Auflösung des Detektors benötigt werden. Dieser Umstand lässt sich durch die ortsabhängige Kombination von lichtempfindlichen Elementen zu Pixeln ausnutzen.

Da die effektive Detektionsfläche, das heißt die Fläche, die in der Auswertung der Messung berücksichtigt wird, in der Regel kleiner ist als die gesamte Detektionsfläche, kann die Anzahl benötigter Entfernungsbestimmungseinrichtungen noch weiter reduziert werden, indem zusätzlich zur Kombination von lichtempfindlichen Element en auch noch ein Multiplexen angewandt wird. Mit Hilfe vorläufiger Messungen können in diesem Fall die Laserstrahlung empfangenden Pixel zunächst identifiziert und anschließend für die eigentliche Messung auf die Entfernungsbestimmungseinrichtungen verteilt werden. Ist N die Gesamtzahl an Pixeln mit einer oder mehreren lichtempfindlichen Elementen und M die Anzahl der zur Auswertung zur Verfügung stehenden Entfernungsbestimmungseinrichtungen, dann müssen maximal aufgerundet N/M vorläufige Messungen zur Identifizierung durchgeführt werden. Die Messaufgabe kann daher mit wenigen Messungen, im Idealfall mit einer einzigen Messung, durchgeführt werden.

Ein weiterer Vorteil kann darin liegen, dass einzelne Pixel unabhängig voneinander kalibriert werden können, zum Beispiel hinsichtlich eines Phasen-Offsets.

## Patentansprüche

1. Messvorrichtung (10) zur optischen Entfernungsmessung, insbesondere handgehaltene Messvorrichtung, aufweisend:
eine Sendeeinrichtung (12) zur Aussendung optischer Messstrahlung (13) auf ein Zielobjekt (15) hin;
eine Empfangseinrichtung (14) mit einer Detektionsfläche (110) zur Detektion von von dem Zielobjekt (15) zurücklaufender optischer Messstrahlung (16); und
eine Auswerteeinrichtung (36) mit einer Mehrzahl von Entfernungsbestimmungseinrichtungen (130, 130', 130");
wobei die Detektionsfläche (110) eine Vielzahl von Pixeln (111) aufweist, wobei jedes Pixel (111) mindestens ein lichtempfindliches Element (101) aufweist;
wobei die Auswerteeinrichtung derart ausgelegt ist, dass der Mehrzahl von Entfernungsbestimmungseinrichtungen (130, 130', 130") jeweils Detektionssignale einer Mehrzahl von Pixeln zugeleitet werden, auf Basis derer die jeweilige Entfernungsbestimmungseinrichtung (130, 130', 130") Entfernungsdaten ermittelt, die mit der Entfernung (48) zwischen der Messvorrichtung (10) und dem Zielobjekt (15) korrelieren,
**dadurch gekennzeichnet, dass**
die Auswerteeinrichtung (36) dazu ausgelegt ist, die Entfernung (48) zwischen der Messvorrichtung (10) und dem Zielobjekt (15) basierend auf einer Auswertung von Entfernungsdaten, die durch die Mehrzahl von Entfernungsbestimmungseinrichtungen (130, 130', 130") ermittelt wurden, zu ermitteln, indem die Entfernungsbestimmungseinrichtungen (130, 130', 130") jeweils dazu ausgelegt sind, eine Flugdauer von Messstrahlung (13, 16) zwischen einer Aussendung von der Sendeeinrichtung (12) bis zu einer Detektion von von dem Zielobjekt (15) zurücklaufender Messstrahlung (16) zu ermitteln.

2. Messvorrichtung nach Anspruch 1, wobei die Messvorrichtung wenigstens einen Multiplexer (140, 140', 140") aufweist, um Detektionssignale von einzelnen Pixeln sequentiell einer Entfernungsbestimmungseinrichtung zuzuleiten.

3. Messvorrichtung nach einem der Ansprüche 1 bis 2, wobei wenigstens einige Pixel (111) jeweils eine Mehrzahl von lichtempfindlichen Elementen (101) enthalten.

4. Messvorrichtung nach Anspruch 3, ferner aufweisend wenigstens einen Kombinierer (160, 160'), der dazu ausgelegt ist, Detektionssignale von lichtempfindlichen Elementen (101), die in einem einzelnen Pixel (111) enthalten sind, zu kombinieren.

5. Messvorrichtung nach Anspruch 3 oder 4, wobei die Anzahl von lichtempfindlichen Elementen (101), die in einem Pixel (111) enthalten sind, abhängig vom Ort des Pixels (111) innerhalb der Detektionsfläche (110) der Empfangseinrichtung (14) variiert.

6. Messvorrichtung nach einem der Ansprüche 3 bis 5, wobei eine Fläche von lichtempfindlichen Elementen, die in einem Pixel (111) enthalten sind, abhängig vom Ort des Pixels (111) innerhalb der Detektionsfläche (110) der Empfangseinrichtung (14) variiert.

7. Messvorrichtung nach Anspruch 5 oder 6, wobei die Sendeeinrichtung (12) und die Empfangseinrichtung (14) nebeneinander entlang einer Parallaxenachse (113) angeordnet sind und wobei die Anzahl von lichtempfindlichen Elementen (101), die in einem Pixel (111) enthalten sind, abhängig vom Ort entlang der Parallaxenachse (113) variiert.

8. Messvorrichtung nach Anspruch 5, 6 oder 7, wobei die Anzahl von lichtempfindlichen Elementen (101), die in einem Pixel (111) enthalten sind, in Pixeln (111) nahe der Sendeeinrichtung (12) kleiner ist als in Pixeln (111) entfernt von der Sendeeinrichtung (12).

9. Messvorrichtung nach einem der Ansprüche 5 bis 8, wobei die Anzahl von lichtempfindlichen Elemente (101), die in einem Pixel (111) enthalten sind, in Pixeln (111) nahe dem Zentrum (122) der Detektionsfläche (110) kleiner ist als in Pixeln (111) entfernt von dem Zentrum (122) der Detektionsfläche (110).

10. Messvorrichtung nach einem der Ansprüche 1 bis 9, wobei die Sendeeinrichtung (12) und die Empfangseinrichtung (14) derart ausgelegt sind, dass eine Anzahl von Pixeln (111), die durch von dem Zielobjekt (15) zurücklaufende optische Messstrahlung (16) gleichzeitig beleuchtet werden, in Abhängigkeit von einem Abstand (48) zwischen dem Zielobjekt (15) und der Messvorrichtung (10) variiert.

11. Messvorrichtung nach einem der Ansprüche 1 bis 10, ferner aufweisend eine nicht-automatisch-fokussierende Optik (52), um von dem Zielobjekt zurücklaufende optische Messstrahlung (16) auf die Detektionsfläche (110) zu leiten.

12. Messvorrichtung nach einem der Ansprüche 1 bis 11, wobei die Empfangseinrichtung (14) und die Auswerteeinrichtung (36) dazu ausgelegt sind, dass Detektionssignale einzelner Pixel (111) unabhängig von Detektionssignalen anderer Pixel (111) von der Auswerteeinrichtung (36) ausgewertet werden können.

13. Messvorrichtung nach einem der Ansprüche 1 bis 12, wobei die Empfangseinrichtung (14) und die Auswerteeinrichtung (36) dazu ausgelegt sind, eine Entfernung (48) zwischen der Messvorrichtung (10) und dem Zielobjekt (15) basierend auf einer Auswertung von Detektionssignalen ausschließlich von Pixeln (111) innerhalb einer effektiven Detektionsfläche (170), auf die Licht der von der Sendeeinrichtung beleuchten Fläche des Zielobjektes zurückgestrahlt wird, zu ermitteln.

14. Messvorrichtung nach einem der Ansprüche 1 bis 13, ferner aufweisend wenigstens einen Multiplexer (140, 140', 140"), der dazu ausgelegt ist, Detektionssignale mehrerer Pixel (111) selektiv an die Auswerteeinrichtung (36) weiterzuleiten.

## Claims

1. Measuring device (10) for optical distance measurement, in particular a handheld measuring device, comprising:
a transmitting unit (12) for emitting optical measurement radiation (13) toward a target object (15);
a receiving unit (14) having a detection area (110) for detecting optical measurement radiation (16) returning from the target object (15); and
an evaluation unit (36) having a plurality of distance determining units (130, 130', 130");
wherein the detection area (110) has a multiplicity of pixels (111), wherein each pixel (111) has at least one light-sensitive element (101);
wherein the evaluation unit is designed in such a way that in each case detection signals of a plurality of pixels are forwarded to the plurality of distance determining units (130, 130', 130"), on the basis of which the respective distance determining unit (130, 130', 130") determines distance data which correlate with the distance (48) between the measuring device (10) and the target object (15),
**characterized in that**
the evaluation unit (36) is designed to determine a distance (48) between the measuring device (10) and the target object (15) on the basis of an evaluation of distance data that were determined by the plurality of distance determining units (130, 130', 130"), with the distance determining units (130, 130', 130") being in each case designed to determine a time of flight of measurement radiation (13, 16) between emission by the transmitting unit (12) until detection of measurement radiation (16) returning from the target object (15).

2. Measuring device according to Claim 1, wherein the measuring device comprises at least one multiplexer (140, 140', 140") in order to forward detection signals of individual pixels sequentially to a distance determining unit.

3. Measuring device according to either of Claims 1 and 2, wherein at least some pixels (111) each contain a plurality of light-sensitive elements (101).

4. Measuring device according to Claim 3, furthermore comprising at least one combiner (160, 160') designed to combine detection signals of light-sensitive elements (101) which are contained in an individual pixel (111).

5. Measuring device according to Claim 3 or 4, wherein the number of light-sensitive elements (101) contained in a pixel (111) varies depending on the location of the pixel (111) within the detection area (110) of the receiving unit (14).

6. Measuring device according to any of Claims 3 to 5, wherein an area of light-sensitive elements contained in a pixel (111) varies depending on the location of the pixel (111) within the detection area (110) of the receiving unit (14).

7. Measuring device according to Claim 5 or 6, wherein the transmitting unit (12) and the receiving unit (14) are arranged alongside one another along a parallax axis (113) and wherein the number of light-sensitive elements (101) contained in a pixel (111) varies depending on the location along the parallax axis (113).

8. Measuring device according to Claim 5, 6 or 7, wherein the number of light-sensitive elements (101) contained in a pixel (111) is smaller in pixels (111) near the transmitting unit (12) than in pixels (111) remote from the transmitting unit (12).

9. Measuring device according to any of Claims 5 to 8, wherein the number of light-sensitive elements (101) contained in a pixel (111) is smaller in pixels (111) near the center (122) of the detection area (110) than in pixels (111) remote from the center (122) of the detection area (110).

10. Measuring device according to any of Claims 1 to 9, wherein the transmitting unit (12) and the receiving unit (14) are designed in such a way that a number of pixels (111) which are illuminated simultaneously by optical measurement radiation (16) returning from the target object (15) varies in a manner dependent on a distance (48) between the target object (15) and the measuring device (10).

11. Measuring device according to any of Claims 1 to 10, furthermore comprising a non-automatically focusing optical unit (52) for directing optical measurement radiation (16) returning from the target object onto the detection area (110).

12. Measuring device according to any of Claims 1 to 11, wherein the receiving unit (14) and the evaluation unit (36) are designed for the purpose that detection signals of individual pixels (111) can be evaluated independently of detection signals of other pixels (111) by the evaluation unit (36).

13. Measuring device according to any of Claims 1 to 12, wherein the receiving unit (14) and the evaluation unit (36) are designed to determine a distance (48) between the measuring device (10) and the target object (15) on the basis of an evaluation of detection signals exclusively of pixels (111) within an effective detection area (170), onto which light from that area of the target object which is illuminated by the transmitting unit is radiated back.

14. Measuring device according to any of Claims 1 to 13, furthermore comprising at least one multiplexer (140, 140', 140") designed to forward detection signals of a plurality of pixels (111) selectively to the evaluation unit (36).

## Revendications

1. Dispositif de mesure (10) destiné à effectuer une mesure optique de distance, notamment tenu à la main, comprenant :
un moyen émetteur (12) destiné à émettre un rayonnement de mesure optique (13) vers un objet cible (15) ;
un moyen récepteur (14) comportant une surface de détection (110) destinée à détecter un rayonnement de mesure optique (16) renvoyé par l'objet cible (15) ; et
un moyen d'évaluation (36) comportant une pluralité de moyens de détermination de distance (130, 130', 130") ;
dans lequel la surface de détection (110) comprend de multiples pixels (111), dans lequel chaque pixel (111) comprend au moins un élément sensible à la lumière (101) ;
dans lequel le moyen d'évaluation est conçu de telle manière que des signaux de détection d'une pluralité de pixels sont respectivement acheminés vers la pluralité de moyens de détermination de distance (130, 130', 130"), sur la base desquels le moyen de détermination de distance (130, 130', 130") respectif obtient des données de distance qui sont corrélées avec la distance (48) entre le dispositif de mesure (10) et l'objet cible (15),
**caractérisé en ce que**
l e moyen d'évaluation (36) est conçu pour obtenir une distance (48) entre le dispositif de mesure (10) et l'objet cible (15) sur la base d'une évaluation de données de distance qui ont été obtenues par la pluralité de moyens de détermination de distance (130, 130', 130"), les moyens de détermination de distance (130, 130', 130") étant respectivement conçus pour obtenir une durée de vol du rayonnement de mesure (13, 16) entre une émission par le moyen émetteur (12) et une détection d'un rayonnement de mesure (16) renvoyé par l'objet cible (15).

2. Dispositif de mesure selon la revendication 1, dans lequel le dispositif de mesure comprend au moins un multiplexeur (140, 140', 140") afin d'acheminer séquentiellement des signaux de détection de pixels individuels d'un moyen de détermination de distance.

3. Dispositif de mesure selon l'une quelconque des revendications 1 à 2, dans lequel au moins certains pixels (111) contiennent respectivement une pluralité d'éléments sensibles à la lumière (101).

4. Dispositif de mesure selon la revendication 3, comprenant en outre au moins un combineur (160, 160') conçu pour combiner des signaux de détection d'éléments sensibles à la lumière (101) qui sont contenus dans un pixel individuel (111).

5. Dispositif de mesure selon la revendication 3 ou 4, dans lequel le nombre d'éléments sensibles à la lumière (101) qui sont contenus dans un pixel (111) varie en fonction de l'emplacement du pixel (111) à l'intérieur de la surface de détection (110) du moyen récepteur (14).

6. Dispositif de mesure selon l'une quelconque des revendications 3 à 5, dans lequel une surface d'éléments sensibles à la lumière qui sont contenus dans un pixel (111) varie en fonction de l'emplacement du pixel (111) à l'intérieur de la surface de détection (110) du moyen récepteur (14).

7. Dispositif de mesure selon la revendication 5 ou 6, dans lequel le moyen émetteur (12) et le moyen récepteur (14) sont disposés côte à côte le long d'un axe de parallaxe (113) et dans lequel le nombre d'éléments sensibles à la lumière (101) qui sont contenus dans un pixel (111) varie en fonction de l'emplacement le long de l'axe de parallaxe (113).

8. Dispositif de mesure selon la revendication 5, 6 ou 7, dans lequel le nombre d'éléments sensibles à la lumière (101) qui sont contenus dans un pixel (111) est plus faible dans des pixels (111) proches du moyen émetteur (12) que dans des pixels (111) éloignés du moyen émetteur (12).

9. Dispositif de mesure selon l'une quelconque des revendications 5 à 8, dans lequel le nombre d'éléments sensibles à la lumière (101) qui sont contenus dans un pixel (111) est plus faible dans des pixels (111) proches du centre (122) de la surface de détection (110) que dans des pixels (111) éloignés du centre (122) de la surface de détection (110).

10. Dispositif de mesure selon l'une quelconque des revendications 1 à 9, dans lequel le moyen émetteur (12) et le moyen récepteur (14) sont conçus de manière à ce qu'un nombre de pixels (111) qui sont simultanément éclairés par le rayonnement optique (16) renvoyé par l'objet cible (15) varie en fonction d'un espacement (48) entre l'objet cible (15) et le dispositif de mesure (10).

11. Dispositif de mesure selon l'une quelconque des revendications 1 à 10, comprenant en outre une optique sans mise au point automatique (52) pour acheminer le rayonnement optique (16) renvoyé par l'objet cible vers la surface de détection (110).

12. Dispositif de mesure selon l'une quelconque des revendications 1 à 11, dans lequel le moyen récepteur (14) et le moyen d'évaluation (36) sont conçus pour que des signaux de détection de pixels individuels (111) puissent être évalués par le moyen d'évaluation (36) indépendamment de signaux de détection d'autres pixels (111) .

13. Dispositif de mesure selon l'une quelconque des revendications 1 à 12, dans lequel le moyen récepteur (14) et le moyen d'évaluation (36) sont conçus pour obtenir une distance (48) entre le dispositif de mesure (10) et l'objet cible (15) sur la base d'une évaluation de signaux de détection à l'exclusion de pixels (111) se trouvant à l'intérieur d'une surface de détection effective (170) sur laquelle est rayonnée en retour la lumière de la surface de l'objet cible éclairée par le moyen émetteur.

14. Dispositif de mesure selon l'une quelconque des revendications 1 à 13, comprenant en outre au moins un multiplexeur (140, 140', 140") conçu pour transmettre sélectivement des signaux de détection de plusieurs pixels (111) au moyen d'évaluation (36).
